# EUROPÄISCHE PATENTSCHRIFT

(11) **EP 0 578 613 B1**
(45) Veröffentlichungstag und Bekanntmachung des Hinweises auf die Patenterteilung: **12.07.2000**
(21) Anmeldenummer: 93810462.7
(22) Anmeldetag: 30.06.1993
(51) Int. Cl.: C08L 63/00

(54) **Härtbare Suspensionen auf Basis von Epoxidharzen**
Curable epoxy resin suspensions
Suspensions durcissables à base de résines époxydes

(30) Priorität: 09.07.1992 CH 216192
(43) Veröffentlichungstag der Anmeldung: 12.01.1994
(73) Patentinhaber: Ciba Specialty Chemicals Holding Inc., 4057 Basel (CH)
(72) Erfinder: Eldin, Sameer H., Dr., CH-1784 Courtepin (CH); Peyer, Robert Peter, Dr., CH-4415 Lausen (CH); Setiabudi, Frans, Dr., D-7812 Bad Krozingen (DE); Gruber, Urs, Dr., CH-4144 Arlesheim (CH)

(56) Entgegenhaltungen:
- EP-A- 0 449 776
- EP-A- 0 576 397
- WO-A-87/00188
- DE-A- 2 023 473
- DE-A- 3 920 332
- GB-A- 2 238 313
- US-A- 3 864 426

## Beschreibung

Die vorliegende Erfindung betrifft ein Verfahren zur Herstellung einer härtbaren Suspension einer Epoxidharzzusammensetzung, bestehend aus einer lagerstabilen Suspension aus einem Epoxidharz und einem darin suspendierten Core/Shell-Polymer, das keine bezüglich eines Epoxidharzsystems reaktiven Gruppen aufweist, einem Epoxidharzhärtungsmittel sowie gegebenenfalls einem Härtungskatalysator, üblichen Füllstoffen, Verstärkungsmaterialien oder Zusätzen.

Es ist bekannt, härtbaren Epoxidharzgemischen Zähigkeitsvermittler (sogenannte "toughener"), wie beispielsweise Core/Shell-Polymere, zuzusetzen, um die Zähigkeitseigenschaften der aus diesen Epoxidharzgemischen hergestellten Formstoffe zu verbessern.

Die in der EP-A-0 449 776 offenbarten, einen Zähigkeitsvermittler, beispielsweise ein Core/Shell-Polymer, enthaltenen Epoxidharzzusammensetzungen werden mittels eines spezifischen Härtungsmittelgemisches, bestehend aus einem Carbonsäureanhydrid und einer Verbindung mit zwei reaktiven Wasserstoffatomen, ausgehärtet.

Im US-Patent 4,778,851 werden Epoxidharze beschrieben, die eine diskontinuierliche Phase von gepfropften Kautschukpartikeln enthalten, die aus einem im Epoxidharz unlöslichen Kern und einer aufgepfropften Hülle bestehen. Die Hülle enthält eine reaktive Gruppe, beispielsweise Glycidylgruppe, welche unter den Härtungsbedingungen des Epoxidharzsystems mitreagiert.

Es wurde nun gefunden, dass man durch Suspendieren eines Zähigkeitsvermittlers, der keine bezüglich eines härtbaren Epoxidharzsystems reaktiven Gruppen aufweist, in einem Epoxidharz eine lagerstabile Suspension erhält, in welcher der Zähigkeitsvermittler homogen und feinstverteilt in Form von Partikeln im Submicron-Bereich vorliegt, und welche mit einem üblichen Härtungsmittel allein ausgehärtet werden kann, um ausgehärtete Formstoffe, Verklebungen, Laminate oder Beschichtungen mit vorteilhaften mechanischen Eigenschaften zu erhalten.

In der EP-A-0 576 397 wird eine Epoxidharzzusammensetzung offenbart, die ein Härtungsmittel und einen darin suspendierten Zähigkeitsvermittler enthält. Das Epoxidharz selbst liegt nicht als Suspension vor.

In der DE-A-2 023 473 wird in einem flüssigen Epoxidharz ein Latex eines unlöslichen vernetzten Elastomers dispergiert, welches nur aus einem Kern besteht und somit im Epoxidharz eine andere Verträglichkeit als ein Core/Shell-Polymer aufweist.

Auch der in der GB-A-2 238 313 verwendete Zähigkeitsvermittler ist von dem erfindungsgemäss zu verwendenden Zähigkeitsvermittler verschieden, da sein Kern aus Naturgummi besteht.

Gegenstand vorliegender Erfindung ist somit ein Verfahren zur Herstellung einer härtbaren Suspension einer Epoxidharzzusammensetzung,dadurch gekennzeichnet, daß man
a) eine lagerstabile Suspension aus einem Epoxidharz und einem darin suspendierten festen Core/Shell-Polymer als Zähigkeitsvermittler herstellt, das einen Kern (core) aus Polybutadien oder Polybutadien/Polystyrol enthält und bezüglich eines Epoxidharzsystems keine reaktiven Gruppen aufweist, indem man entweder
   a1), bei Verwendung von flüssigen Epoxidharzen, die wäßrige Emulsion des Core/Shell-Polymers gegebenenfalls in Gegenwart eines Lösungsmittels dem Epoxidharz zugibt und das Wasser oder Wasser/Lösungsmittelgemisch unter Vakuum abdestilliert oder
   a2), bei Verwendung von festen Epoxidharzen, das feste Epoxidharz aufschmilzt oder in einem geeigneten Lösungsmittel löst und die wäßrige Emulsion des Core/Shell-Polymers zugibt und anschließend das Wasser oder Wasser/Lösungsmittelgemisch unter Vakuum abdestilliert, und dann in die lagerstabile Suspension
b) ein Härtungsmittel ausgewählt aus einem Polyamin, Dicyandiamid oder einem katalytisch härtenden Härtungsmittel und gegebenenfalls
c) einen Härtungskatalysator oder übliche Füllstoffe, Verstärkungsmaterialien oder Zusätze mit Hilfe bekannter Mischaggregate einmischt.

Für die Herstellung der lagerstabilen Suspensionen (a) eignen sich als Epoxidharze die in der Epoxidharztechnik üblichen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure. Es können aber auch cycloaliphatische Polycarbonsäuren eingesetzt werden, wie beispielsweise Tetrahydrophthalsäure, 4-Methyltetrahydrophthalsäure, Hexahydrophthalsäureoder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan- 1,2-diol oder Poly-(oxypropylen)-glykolen, Propan- 1,3-diol, Butan- 1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis- (4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan. Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Bevorzugt verwendet man zur Herstellung der lagerstabilen Suspensionen einen flüssigen oder festen Polyglycidylether oder -ester, insbesondere einen flüssigen oder festen Bisphenoldiglycidylether oder einen festen oder flüssigen Diglycidylester einer cycloaliphatischen oder aromatischen Dicarbonsäure, oder ein cycloaliphatisches Epoxidharz. Es können auch Gemische von Epoxidharzen verwendet werden.

Als feste Polyglycidylether und -ester kommen Verbindungen mit Schmelzpunkten oberhalb Raumtemperatur bis etwa 250 °C in Betracht. Bevorzugt liegen die Schmelzpunkte der festen Verbindungen im Bereich von 50 bis 150 °C. Solche festen Verbindungen sind bekannt und zum Teil im Handel erhältlich. Als feste Polyglycidylether und -ester können auch die durch Vorverlängerung von flüssigen Polyglycidylethern und -estern erhaltenen Advancement-Produkte verwendet werden.

Als Zähigkeitsvermittler für die lagerstabilen Suspensionen (a) kommen Core/Shell-Polymere, wie sie beispielsweise aus der EP-A-0-045 357 und der US-A-4,419,496 bekannt sind, in Frage. Sie dürfen keine reaktiven Gruppen aufweisen, die mit dem jeweiligen Epoxidharz in der Suspension reagieren könnten.

Core/Shell-Polymere haben in der Regel einen weichen Kern (Core) aus einem elastomeren Material, der im Epoxidharz unlöslich ist. Darauf aufgepfropft ist eine Schale (Shell) aus polymerem Material, die keine reaktionsfähige Gruppen aufweist. Das Core/Shell-Polymer kann auch ein sogenanntes Multicore/Shell-Polymer sein, wie beispielsweise ein solches mit der Aufbaufolge weicher Kern, harte Schale, weiche Schale und harte Schale. Solche Polymere sind beispielsweise in der GB-A-2,039,496 beschrieben.

Beispiele für polymere Shell-Materialien sind Polystyrol, Polyacrylnitril, Polyacrylat- und -methacrylatmono-, -co- oder -terpolymere oder Styrol/Acrylnitril/Glycidylmethacrylat-Terpolymere.
Vorzugsweise wird als Shell-Material Polymethylmethacrylat eingesetzt.

Die Grösse solcher Core/Shell-Partikel beträgt zweckmässig 0,05-30 µm, vorzugsweise 0,05-15 µm. Insbesondere gelangen Core/Shell-Partikel mit einer Grösse von kleiner als 1 µm zur Anwendung.

Die Core/Shell-Polymere lassen sich nach der z.B. in der US-A-4,419,496 oder der EP-A-0 045 357 beschriebenen Weise herstellen.

Es werden Core/Shell-Polymere eingesetzt, die einen Kern (Core) aus Polybutadien oder Polybutadien/Polystyrol enthalten. Dieses Core-Material ist vorzugsweise teilvernetzt.

Die Schale (Shell) besteht vorzugsweise aus Polymeren auf der Basis von Methylmethacrylat, Methacrylsäurecyclohexylester, Acrylsäurebutylester, Styrol, Methacrylnitril.

Die Menge an Zähigkeitsvermittler in den erfindungsgemässen, ein Epoxidharz enthaltenden Suspensionen beträgt vorzugsweise bis 80 Gew.-%, insbesondere bis 50 Gew.-%, bezogen auf das Epoxidharz.

Die lagerstabilen Suspensionen aus einem Epoxidharzhärtungsmittel und einem darin suspendierten Zähigkeitsvermittler eignen sich in einfacher und praktischer Weise zur Herstellung von härtbaren Epoxidharzzusammensetzungen mit homogener Verteilung des Zähigkeitsvermittlers auch in der Epoxidharzzusammensetzung, wobei diese ebenfalls als Suspension vorliegen kann. Die erfindungsgemässen Suspensionen stellen somit verarbeitungstechnisch gesehen eine Vereinfachung zur Herstellung von härtbaren Epoxidharzzusammenstzungen mit homogener Verteilung eines darin enthaltenen Zähigkeitsvermittlers dar. Ausserdem wird bei der Herstellung solcher Epoxidharzzusammensetzungen in vorteilhafter Weise eine gewisse Qualitätskonstanz erreicht.

Als Polyamine können für die Härtung der oben genannten Suspensionen aliphatische, cycloaliphatische, aromatische oder heterocyclische Amine eingesetzt werden, wie beispielsweise Ethylendiamin, Propan-1,2-diamin, Propan- 1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan- 1,6-diamin, 2,3,3,-Trimethylhexan-1,6-diamin, N,N-Dimethyl- und N,N-Diethylpropan- 1,3-diamin, Ethanolamin, m- und p-Phenylendiamin , Bis-(4-aminophenyl)-methan, Anilin-Formaldehyd-Harz, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren.

Es können auch katalytisch wirkende Härtungsmittel zur Härtung der Suspensionen verwendet werden, wie tertiäre Amine, beispielsweise 2,4,6-Tris-(dimethylaminoethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe und Chelate, die durch Umsetzung von Bortrifluorid mit zum Beispiel 1,3-Diketonen erhalten werden.

Mit den Epoxidharzhärtungsmitteln können auch geeignete Härtungsbeschleuniger eingesetzt werden. Beispielsweise können bei Verwendung von Dicyandiamid als Beschleuniger tertiäre Amine oder deren Salze, quaternäre Ammoniumverbindungen oder Alkalimetallalkoxide verwendet werden.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Katalytisch wirkende Härtungsmittel werden allgemein in Mengen von 1 bis 40 Gewichtsteilen pro 100 Gewichtsteile Epoxidharz eingesetzt.

Die erfindungsgemässen Suspensionen können auch die in der Epoxidharztechnik üblichen Füllstoffe und Verstärkungsmaterilalien enthalten. Als Füllstoffe kommen beispielsweise die folgenden in Betracht: Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Als Verstärkungsmaterialien eignen sich beispielsweise Glas- oder Kohlenstoffasern.

Die erfindungsgemässen Suspensionen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Suspensionen zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville beschrieben wird.

Die erfindungsgemässen Suspensionen eignen sich ausgezeichnet als Giessharze, Laminierharze, Klebstoffe, Pressmassen, Beschichtungsmassen sowie als Umhüllungssysteme für elektrische und elektronische Bauteile, insbesondere als Giessharze, Laminierharze oder Klebstoffe.

### Beispiel A: Herstellung einer Diglycidylether-Core/Shell-Polymer-Suspension

a) Herstellung eines Core/Shell-Polymeres:
202,7 g Polybutadienlatex (BL 2004 K der Firma Bayer AG) mit einem Feststoffgehalt von 59,2 % und 397,3 g deionisiertes Wasser werden in einem 1 Liter-Planschliffkolben, der mit Doppelmantel, Glasankerrührer, Thermometer, Kühler, Umlaufthermostat und Gasanschluss ausgerüstet ist, unter Stickstoff vorgelegt und mit 100 rpm (Umdrehungen pro Minute) gerührt. Das Gemisch wird auf 80°C ± 1 °C aufgeheizt. Nach 55 Minuten (min) ist eine Innentemperatur von 80°C erreicht. Nun wird mit dem Zutropfen von 120,0 g destilliertem Methacrylsäuremethylester (purum, der Firma Fluka, Schweiz) und einer Lösung von 4,0 g Kaliumperoxiddisulfat und 3,5 g Dodecylbenzolsulfonsäure-Nasalz in 110 ml destilliertem Wasser begonnen. Nach 3,5 Stunden (h) liegt eine homogene. weisse Emulsion vor. Nach insgesamt 6 h 10 min ist die Zugabe des Methylmethacrylats sowie des Initiators beendet.
Es wird während weiteren 2 h bei 80°C nachgerührt. Am Ende dieser Zeit werden 3 ml einer 20%igen Emulsion von n-Octadecyl-3-(3,5-di-tert.-butyl-4-hydroxyphenyl)-propionat der homogenen weissen Emulsion beigegeben, und das Ganze wird dann auf Raumtemperatur (RT) abgekühlt. Bei RT ist die Emulsion ebenfalls homogen und weiss gefärbt. Sie wird durch Glaswolle filtriert. Es sind keine Agglomerate vorhanden. Die Emulsion wird auf 865 g verdünnt, was einen Festkörpergehalt von 27,2 % ergibt. Die so erhaltene Emulsion wird als Zähigkeitsvermittler (toughener) eingesetzt.
b) In einem 2 Liter-Planschliffkolben, der mit Glasankerrührer, Thermometer, Kühler, Destiliationsrohr mit Vorlage und Vakuum-Anschluss ausgerüstet ist, werden 600 g flüssiger Bisphenol A-digylcidylether mit einem Epoxidgehalt von 5,42 Äquivalenten/kg vorgelegt und 220,6 g der gemäss Beispiel Aa) hergestellten wässrigen Emulsion des Core/Shell-Polymers dazugegeben. Das Ganze wird während 15 min verrührt.
Anschliessend wird das homogene Gemisch auf 80°C erwärmt und auf 15-20·10³ Pa (150-200 mbar) evakuiert, wobei das Wasser abdestilliert. Gegen Ende der Destillation wird der Druck auf 4-5·10³ Pa (40-50 mbar) erniedrigt, wobei innerhalb von etwa 30 min das restliche Wasser entfernt wird. Es wird eine homogene weisse, bei 80°C gut rührbare Suspension erhalten, die nach Abkühlen auf 50°C abgefüllt wird.

| | |
|---|---|
| Ausbeute: | 656 g |
| Epoxidgehalt: | 4,93 Äquivalente/kg |
| Gehalt an Zähigkeitsvermittler: | 10 phr*, bezogen auf das Epoxidharz. |

| | |
|---|---|
| *phr = parts per hundred (Gewichtsteile pro 100 Gewichtsteile Epoxidharz). | |

### Beispiel B: Herstellung einer Diglycidylether-Core/Shell-Polymer-Suspension

a) Herstellung eines Core/Shell-Polymeres:
Es wird die Emulsion gemäss Beispiel Aa) mit einem Festkörpergehalt von 27,1 % verwendet.
b) Beispiel Ab) wird wiederholt, wobei als Epoxidharz nun 650 g eines Gemisches aus 150g Butan-1,4-dioldiglycidylether und 850g eines flüssigen Bisphenol A-diglycidylethers, das einen Epoxidgehalt von 5,91 Äquivalenten/kg, eingesetzt werden. Hinzu kommen 359,8 g Polybutadienlatex. Man erhält eine gut rührbare Suspension.

| | |
|---|---|
| Epoxidgehalt: | 5,14 Äquivalente/kg |
| Gehalt an Zähigkeitsvermittler: | 15 phr. |
| Viskosität (Epprecht) bei 40°C | 2100 mPa·s. |

### Beispiel C: Herstellung einer Diglycidylester-Core/Shell-Polymer-Suspension

a) Herstellung eines Core/Shell-Polymeres:
Beispiel Aa) wird wiederholt, und es wird eine Emulsion mit einem Festkörpergehalt von 27,2 % erhalten.
b) Beispiel Ab) wird wiederholt, wobei als Epoxidharz nun 600g Cyclohexan-1,2-dicarbonsäurediglycidylester mit einem Epoxidgehalt von 5,6-6,2 Äquivalenten/kg eingesetzt werden. Man erhält eine gut rührbare Suspension.

| | |
|---|---|
| Epoxidgehalt: | 5,32 Äquivalente/kg |
| Gehalt an Zähigkeitsvermittler: | 10 phr. |

### Beispiel D: Herstellung einer Diglycidylether-Core/Shell-Polymer-Suspension

a) Herstellung eines Core/Shell-Polymeres:
Beispiel Aa) wird wiederholt, und es wird eine Emulsion mit einem Festkörpergehalt von 28,15 % erhalten.
b) In einem 3 Liter-Planschliffkolben, ausgerüstet wie im Beispiel Ab), werden 1050,0 g eines festen, mit 0,84 Gew.-% Nonylphenolhydroxyethylether modifiziertem Bisphenol A-diglycidylethers mit einem Epoxidgehalt von 2,55-2,7 Äquivalenten/kg und einem Schmelzbereich von 35-50°C vorgelegt und ohne Rühren auf 130°C erwärmt. Dann wird die gemäss Beispiel Da) erhaltene Emulsion bei dieser Temperatur zugegeben und während 15 min verrührt. Das Gemisch wird auf 65000-70000 Pa (650-700) mbar evakuiert und bei diesem Vakuum wird während etwa 2 h der grösste Teil des Wassers über das Destillationsrohr und die Vorlage abdestilliert. Es wird vorsichtig weiter evakuiert, wobei die Masse vorübergehend recht viskos wird. Zum Schluss wird die Masse während 30 min bei 2000-3000 Pa (20-30 mbar) und 130°C und anschliessend 15 min im Hochvakuum bei 10-20 Pa (0,1-0,2 mbar) gerührt. Man erhält eine weisse, trübe, viskose Masse, die bei etwa 120°C auf beschichtetes Papier ausgegossen wird. Nach dem Abkühlen wird die erstarrte Masse mechanisch zerkleinert.

| | |
|---|---|
| Epoxidgehalt: | 2,40 Äquivalente/kg |
| Gehalt an Zähigkeitsvermittler: | 10 phr. |

### Beispiel E (nicht erfindungsgemäss): Herstellung einer

### Diglycidylether-Core/Shell-Suspension

a) Herstellung eines Core/Shell-Polymeres:
Nach Spülung der aus einem 1-Liter-Planschliffkolben, Glasankerrührer, Thermometer, Kühler, Tropftrichter und Umwälzthermostat bestehenden Apparatur mit Stickstoff werden 600 g Wasser, 18 g eines aus 121,4 g Butylacrylat, 28,6 g Styrol und 3,2 g Allylmethacrylat bestehenden Gemisches (Monomer-Gemisch I) und 1,2 g Natriumdioctylsulfosuccinat (Hydropalat®875 der Firma Henkel) vorgelegt. Die leicht trübe Emulsion wird unter Rühren bei einer Aussentemperatur (TA) von 90°C innerhalb von etwa 20 min auf 65-70°C erwärmt. Nach 20 min werden bei einer Innentemperatur (TI) von 65-70°C 10 ml der 1%-igen wässrigen Kaliumpersulfat-Lösung dazugegeben. Nach weiteren 20 min werden weitere 10 ml einer 1 %-igen wässrigen Kaliumpersulfat-Lösung und anschliessend innerhalb von 45 min 136,2 g des Monomer-Gemisches I dazugegeben. Nach beendeter Zugabe rührt man die Reaktionsemulsion noch 30 min. Zur Reaktionsemulsion werden 25 ml der 1%-igen wässrigen Kaliumpersulfat-Lösung und anschliessend 76,6 g Methacrylsäuremethylester und 1,2 g Natriumdioctylsulfosuccinat innerhalb von 1 h zugetropft. Anschliessend werden weitere 25 ml Kaliumpersulfat-Lösung zugetropft, und die Emulsion wird 1 Stunde gerührt, wobei nach 30 min nochmals 12 ml Kaliumpersulfat-Lösung zugegeben werden. Nach Abkühlen auf RT wird die milchig-weisse Emulsion durch Glaswolle filtriert.
Ausbeute: 1065 g Latex mit einem Festkörpergehalt von 21,5 %.
b) In einer aus einem 2-Liter-Planschliffkolben mit Glasankerrührer, Thermometer, Vigreux-Kolonne, Kühler, Destillationsrohr mit Vorlage, Heizbad, Wasserstrahlpumpe-Vakuum-Anschluss bestehenden Apparatur werden 600,0 g eines Bisphenol A-diglycidylethers mit einem Epoxidgehalt von 5,40 Aequivalenten/kg und 279,1 g des unter a) beschriebenen Latex vorgelegt und während 5 min verrührt. Der Kolbeninhalt wird auf eine TI 70-80°C erwärmt, und die Apparatur wird vorsichtig evakuiert. Bei 20000 Pa (200 mbar) beginnt das Wasser zu destillieren und dann wird das Vakuum stufenweise erhöht. Nach etwa 2 h ist alles Wasser entfernt und das Endvakuum von 2000-3000 Pa (20-30 mbar) erreicht. Die homogene, weiss-trübe Suspension wird nach 30 min bei einer TI von 70-80°C und 2000-3000 Pa (20-30 mbar) gerührt und anschliessend heiss abgefüllt.

| | |
|---|---|
| Ausbeute: | 659,4g Suspension (99,9% d.Th.) |
| Epoxidgehalt: | 4,91 Aequivalente/kg |
| Gehalt an Zähigkeitsvermittler: | 10 phr |
| Viskosität (Epprecht) bei 40°C: | 3 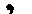 440 mPa·s. |

### Beispiel F (nicht erfindungsgemäss): Herstellung einer

### Diglycidylester-Core/Shell-Polymer-Suspension

a) Herstellung eines Core/Shell-Polymeres:
Beispiel Ea) wird wiederholt, und es wird ein Latex mit einem Festkörpergehalt von 23,0% erhalten.
b) Beispiel Eb) wird wiederholt, wobei als Epoxidharz nun 970g Cyclohexan- 1,2-dicarbonsäurediglycidylester mit einem Epoxidgehalt von 5,89 Aeqivalenten/kg und 421,7 g Latex gemäss Beispiel Fa) eingesetzt werden. Man erhält eine dünnflüssige Suspension mit folgenden Kenndaten:

| | |
|---|---|
| Viskosität (Epprecht) bei 40°C: | 510 mPa·s |
| Epoxidgehalt: | 5,35 Aequivalente/kg |
| Gehalt an Zähigkeitsvermittler: | 10 phr. |

### Beispiel G: Herstellung einer Suspension auf Basis eines festen Diglycidylether-Epoxidharzes

a) Herstellung eines Core/Shell Polymeres:
Beispiel Aa) wird wiederholt, und es wird ein Latex (Emulsion) mit einem Festkörpergehalt von 23.8% erhalten.
b) In der gemäss Beispiel Eb) verwendeten Apparatur werden 600,0 g eines festen, mit 0,84 Gew. % Nonylphenolhydroxyäthylether modifizierten Bisphenol-A-Diglycidylethers mit einem Epoxidgehalt von 2,64 Aequivalenten/kg und 400 ml Methylethylketon vorgelegt und auf eine TI von 80-90°C erwärmt. Das Gemisch wird dann langsam bis zur vollständigen Lösung gerührt. 252,1g Latex gemäss Ga) werden dazugegeben und das Gemisch 5 min verrührt. Die Apparatur wird nun vorsichtig evakuiert. Bei 60000 Pa (600 mbar) beginnt Wasser/Methylaethylketon zu destillieren.Die Temperatur wird stufenweise auf 140-150°C, das Vakuum zunächst bis 2000-3000 Pa (20-30 mbar) und dann stufenweise weiter erhöht. Nach etwa 2 h ist alles Wasser/Methylaethylketon abdestilliert. Beim Endvakuum und einer TI von 140-150°C wird während 15 min nachgerührt. Die homogene, weiss-trübe Suspension wird in Stahlblechschalen zu einer Schicht von 2-3 cm ausgegossen.
Ausbeute: 658,6g (99,8% d.Th.). Das Produkt weist die folgenden Kenndaten auf:

| | |
|---|---|
| Viskosität (Epprecht) bei 120°C: | 1340 mPa·s |
| Epoxidgehalt: | 2,4 Aequivalente/kg |
| Gehalt an Zähigkeitsvermittler: | 10 phr. |

### Beispiel H (nicht erfindungsgemäss): Herstellung einer Suspension auf Basis eines festen Diglycidylether-Epoxidharzes

a) Herstellung eines Core/Shell-Polymeres:
Beispiel Ea) wird wiederholt, und es wird ein Latex mit einem Festkörpergehalt von 23,4% erhalten.
b) Das Beispiel Gb) wird wiederholt, wobei 161,3 g Latex gemäss Beispiel Ha) eingesezt werden. Man erhält eine bei RT feste homogene Suspension mit folgenden Kenndaten:

| | |
|---|---|
| Viskosität (Epprecht) bei 120°C: | 1280 mPa·s |
| Epoxidgehalt: | 2,40 Aequivalente/kg |
| Gehalt an Zähigkeitsvermittler: | 10 phr. |

### Beispiel I: Herstellung einer Suspension auf Basis von Bisphenol F-diglycidylether

a) Herstellung eines Core/Shell Polymeres:
Beispiel Aa) wird wiederholt, und es wird eine Emulsion mit einem Festkörpergehalt von 28,25% erhalten.
b) Beispiel Ab) wird wiederholt, wobei 354,0 g der Emulsion gemäss Beispiel Ia) und 1000g Bisphenol F-diglycidylether (Isomerengemisch) mit einem Epoxidgehalt von 6.20 Aequivalenten/kg eingesetzt werden. Man erhält eine weisse, homogene, dünnflüssige Suspension mit folgenden Kenndaten:

| | |
|---|---|
| Viskosität (Epprecht) bei 25°C: | 1060 mPa·s |
| Epoxidgehalt: | 5,64 Aequivalente/kg |
| Gehalt an Zähigkeitsvermittler: | 10 phr. |

### Beispiel J: Herstellung einer Suspension auf Basis eines cycloaliphatischen Epoxidharzes

a) Herstellung eines Core/Shell Polymeres:
Analog zu Beispiel Aa) werden auf 300g eines Polybutadien/Styrol Latex (Intex® 084) mit einem Styrol-Gehalt von 24% und mit einem Feststoffgehalt von 40,0% 120g Methacrylsäuremethylester aufgepropft.

| | |
|---|---|
| Ausbeute: | 937,3 g |
| Festkörpergehalt: | 25,7% |
| Shore-D-Härte: | 62. |

b) 214,0 g des unter Ja) erhaltenen Latex wurden analog zu Beispiel Eb) mit 550 g 3,4-Epoxycyclohexylmethyl-3,4-epoxycyclohexylcarboxylat, das einen Epoxidgehalt von 7,18 Aequivalenten/kg aufweist, zu einer Suspension verarbeitet.

| | |
|---|---|
| Ausbeute: | 604,7 g |
| Viskosität (Höppler) 25°C: | 2870 mPa·s |
| Epoxidgehalt: | 6,53 Aequivalente/kg |
| Gehalt an Zähigkeitsvermittler: | 10 phr. |

### Beispiel K: Herstellung einer Diglycidylether-Core/Shell-Polymer-Suspension

a) Herstellung eines Core/Shell-Polymeres
Analog zu Beispiel Ja) wird ein Core/ Shell-Polymer mit einem Polybutadien/Styrol-Core (Intex® 084 mit einem Styrolgehalt von 24% und einem Feststoffgehalt von 40%) und einem Methylmethacrylat als Shell hergestellt. Der entstandene Polymer-Latex weist einen Festkörpergehalt von 24.3% auf.
b) Beispiel Ab) wird wiederholt, wobei als Epoxidharz nun 600 g eines Gemisches aus 15 g Butan-1,4-dioldiglycidylaether und 85 g eines flüssigen Bisphenol-A-diglycidylethers, das einen Epoxidgehalt von 5,94 Aequivalewnten/kg aufweist, eingesetzt werden. Hinzu kommen 370,4g des unter Ka) beschriebenen Core/Shell-Polymer-Latex. Man erhält eine gut rührbare Suspension.

| | |
|---|---|
| Viskosität (Epprecht) bei 40°C: | 2420 mPa·s |
| Epoxidgehalt: | 5,16 Aequivalente/kg |
| Gehalt an Zähigkeitsvermittler: | 15 phr. |

### Beispiel L: Herstellung einer Diglycidylether-Core/Shell-Polymer-Suspension

a) Herstellung eines Core/Shell-Polymeres
Es wird ein Core/Shell-Polymer analog Beispiel Aa) hergestellt. Der Polymer-Latex weist einen Festkörpergehalt von 27.1% auf.
b) Beispiel Ab) wird wiederholt, wobei als Epoxidharz 500g eines flüssigen Bisphenol A-diglycidylethers mit einem Epoxidgehalt von 5,38 Aequivalenten/kg verwendet werden. Hinzu kommen 184,5 g des unter La) beschriebenen Core/Shell-Polymer-Latex. Die fertige Suspension weist folgende Kenndaten auf:

| | |
|---|---|
| Viskosität (Epprecht) bei 40°C: | 3 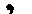 280 mPa·s |
| Epoxidgehalt: | 4,89 Aequivalente/kg |
| Gehalt an Zähigkeitsvermittler: | 10 phr. |

### Beispiel 1 (nicht erfindungsgemäss)

100 g der im Beispiel A hergestellten Diglycidylether-Core/ShellPolymer-Suspension und 90 g Methyltetrahydrophthalsäure mit einer Viskosität von 50-100 mPa·s bei 25°C werden auf etwa 60-70 °C erwärmt, dann wird 1 g 1-Methylimidazol zum Reaktionsgemisch hinzugefügt, und das Ganze wird gut verrührt. Zwecks Entfernung von eingeschlossenen Luftbläschen wird die Giessharzmasse 5 min unter Hochvakuum evakuiert und dann vergossen. Die Härtung erfolgt während 2 h bei 100°C und anschliessend 8 h bei 140°C. Die Formkörper weisen eine Bruchzähigkeit (Bend Notch Methode gemäss CG-Norm PM 258-0/90) von 369,9 J/m² auf.

### Beispiel 2

Analog Beispiel 1 werden 115 g der im Beispiel B hergestellten Diglycidylether-Core/Shell-Polymer-Suspension und 35 g 3,3 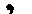 -Dimethyl-4,4 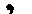 -diaminodicyclohexylmethan zu einer Giessformmasse verrührt, die während etwa 8 min evakuiert und dann vergossen wird. Die Härtung wird während 1h bei 100°C und 8 h bei 140°C durchgeführt. Die Formkörper weisen eine Bruchzähigkeit (Bend Notch Methode) von 522,0 J/m² auf.

### Beispiel 3

Analog Beispiel 1 werden 115 g der im Beispiel B hergestellten Diglycidylether-Core/Shell-Polymer-Suspension, 35 g 3,3 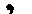 -Dimethyl-4,4 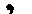 -diaminodicyclohexylmethan und 5 g Benzylamin zu einer Giessformmasse verrührt, die während etwa 8 min evakuiert und dann vergossen wird. Die Härtung wird während 1h bei 100°C und 8 h bei 140°C durchgführt. Die Formkörper weisen eine Bruchzähigkeit (Bend Notch Methode) von 1229,7 J/m² auf.

### Beispiel 4 (nicht erfindungsgemäss)

110 g der gemäss Beispiel D hergestellten Diglycidylether-Core/Shell-Polymer-Suspension werden im Ofen bei 120-140°C vorgewärmt. Dann werden 35 g eines Gemisches aus 35 g 1,3-Isobenzofurandion und 65 g 1,2,5,6-Tetrahydrophthalsäureanhydrid aufgeschmolzen und 217,5 g auf 160°C vorerwärmtes Quarzmehl (Quarzmehl K8 der Firma Edouard Kick, Deutschland) dazugegeben. Das Ganze wird vermischt, bei etwa 5 mbar evakuiert und dann vergossen. Die Härtung erfolgt während 16 h bei 140°C. Die Formkörper weisen eine Bruchzähigkeit (Double Torsion Test gemäss CG-Norm PM 216-0/89) von 961,0 J/m² auf.

### Beispiel 5

115 g der gemäss Beispiel L hergestellten Diglycidylether-Core/Shell-Polymer-Suspension, 7,57 g Dicyandiamid und 2,27 g Chlortoluron [3-(3-Chlor-4-methylphenyl)-1,1-dimethylharnstoff] werden auf dem Dreiwalzenstuhl zweimal abgerieben, dann wird 1,0 g Aerosil® (SiO₂) dazugegeben, vermischt und das Ganze wird nochmals zweimal auf dem Dreiwalzenstuhl abgerieben. Die nun absolut homogene Suspension wird zum Schluss während 45 min bei einem Vakuum von 0,1 mbar entgast. Die fertige Formulierung weist bei 40°C eine Viskosität (Epprecht) von 12 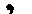 800 mPa·s auf. Mit der Formulierung werden polierte Aluminiumstreifen. ölige Stahlstreifen sowie polierte Stahlstreifen verklebt und bei 160°C während 30 min ausgehärtet. Ausserdem wird eine zusätzlich 1-Gew.-% Ballotinis (Durchmesser 50 µm) enthaltende Formulierung zum Verkleben von öligen Stahlstreifen unter gleichen Härtungsbedingungen eingesetzt. Die Verklebungen weisen folgende Eigenschaften auf:

| | |
|---|---|
| Zugscherfestigkeit gemäss ISO 4587 polierte Aluminiumstreifen: | 34,7 N/mm² |
| ölige Stahlstreifen | 21,8 N/mm² |
| ölige Stahlstreifen mit Ballotinis | 24,9 N/mm² |
| Schälfestigkeit gemäss ISO 4578 polierte Stahlstreifen | 5,0 N/mm². |

### Beispiel 6 (nicht erfindungsgemäss)

110 g der im Beispiel E hergestellten Diglycidylether-Core/Shell-Polymer-Suspension und 90 g Methyltetrahydrophthalsäureanhydrid werden auf etwa 60-70°C erwärmt, dann wird 1g 1-Methylimidazol zum Reaktionsgemisch hinzugefügt, das Ganze wird gut verrührt und anschliessend vor dem Vergiessen zu Normplatten während 5 min unter Hochvakuum evakuiert. Die Härtung wird 2 h bei 100°C und 8 h bei 140°C vorgenommen. An den erhaltenen Formkörpern werden folgende Eigenschaften gemessen.

| | |
|---|---|
| Glasumwandlungstemperatur (TMA): | 149 C |
| Biegefestigkeit (ISO 178): | 127,4 N/mm² |
| Schlagbiegefestigkeit (ISO 179): | 31 kJ/m² |
| Bruchzähigkeit (Bend Notch Methode): | 394 J/m². |

### Beispiel 7 (nicht erfindungsgemäss)

Beispiel 6 wird wiederholt mit dem Unterschied, dass der Formulierung nun 300g Quarzmehl (Quarzmehl W12) beigegeben werden. Unter den gleichen Härtungsbedingungen werden Formkörpern mit folgenden Eigenschaften erhalten.

| | |
|---|---|
| Glasumwandlungstemperatur (TMA): | 146°C |
| Biegefestigkeit (ISO 178); | 109,9 N/mm² |
| Schlagbiegefestigkeit (ISO 179): | 7,3 kJ/m² |
| Bruchzähigkeit (Double Torsion Test): | 438 J/m². |

### Beispiel 8

53 g der gemäss Beispiel I hergestellten Diglycidylether-Core/Shell-Polymer-Suspension, 30 g eines Phenolnovolakglycidylethers mit einem Epoxidgehalt von 5,6-5,8 Äquivalenten/kg, 12,2 g Bisphenol A-diglycidylether mit einem Epoxidgehalt von 5,1-5,8 Äquivalenten/kg, 4,8 g Dicyandiamid, 0,65g 2-Äthyl-4-methyl-imidazol und 0.65 g Benzylalkohol werden gut gemischt. Die Formulierung weist bei 60°C eine Viskosität (Epprecht) von 330 mPa·s auf, und die Gelierzeit (Platte) bei 120°C beträgt 12,7 min. Nach einer Härtung von 30 min bei 120°C und 1 h bei 150°C werden Formkörpern mit folgenden Eigenschaften erhalten.

| | |
|---|---|
| Glasumwandlungstemperatur (DSC): | 136°C |
| Biegefestigkeit (ISO 178): | 125 N/mm² |
| Bruchzähigkeit (Bend Notch Methode): | 306 J/m². |

Mit der Formulierung werden Rohre von 40mm Innendurchmesser mit nur Umfangswicklung, wie sie für die Bestimmung der Querzugfestigkeit benutzt werden, auf einer Faserwickelanlage der Firma Bolenz & Schäfer hergestellt. Die verfahrenstechnischen Daten sind:

| | |
|---|---|
| Imprägnierbad-Temperatur: | 50°C |
| Wickeldorn, innenbeheizt auf: | 60-65°C |
| Faser Abzugsspannung: | 4 kp |
| Gelierung, rolierend auf Dorn: | 30min bei 120°C |
| Harzgehalt: | 23 Gew.-% |
| Glasfaser Vetrotex®RO99 P122 1200 Tex | |
| Innendurchmesser: | 40 mm |
| Aussendurchmesser in der eingeschnürten Zone: | 42 mm |
| Länge: | 160 mm |

Die Formulierung weist eine genügend tiefe Viskosität auf und eignet sich problemlos für das sogenannte Filament Winding-Verfahren. Es wird kein Sedimentieren im Imprägnierbad oder Aussieben an den Fasern beobachtet.

An den Probekörpern werden Querzugsfestigkeits-Messungen gemäss den Angaben von A.Puck und W.Schneider in On Failure Mechanisms and Failure Criteria of Filament Wound Glass-Fibre/Resin Composites (Plastics & Polymers,February 1969,pp 33-43) vorgenommen. Die Härtung erfolgt 1 h bei 150°C.

| | |
|---|---|
| Querzugfestigkeit: | 67,17 MPa |
| Dehnung: | 5,299 mm/m |
| Modul: | 14,14 GPa. |

### Beispiel 9 (nicht erfindungsgemäss)

Ein Gemisch aus 100 g der Diglycidylether-Core/Shell-Polymer-Suspension gemäss Beispiel A und 87 g eines aus 2 Mol Tetrahydrophthalsäureanhydrid und einem Mol Neopentylglykol hergestellten, carboxylgruppen-terminierten Diesters weist bei 50°C eine Viskosität (Höppier) von 290 mPa·s und eine Gebrauchsdauer von 9,5 h auf.

Die aus dieser Formulierung nach Härtung von 4 h bei 80°C und 4 h bei 140°C erhaltenen Formkörper weisen folgende Eigenschaften auf:

| | |
|---|---|
| Glasumwandlungstemperatur (DSC): | 151 C° |
| Biegefestigkeit (ISO 178): | 120 MPa |
| Bruchzähigkeit (Bend Notch Methode): | 217 J/m². |

Ein aus dieser Formulierung hergestelltes Glasfaser-Laminat mit einem Harzgehalt von 40 %weist nach Härtung von 4 h bei 90°C und 8 h bei 140°C eine Bruchzähigkeit von 692 J/m2 auf.

Die Formulierung, die sich problemlos im Filament Winding-Verfahren eingesetzt werden kann, wird wie im Beispiel 8 zum Umwickeln von Rohren verwendet.

| | |
|---|---|
| Imprägnierbad-Temperatur: | 50°C |
| Wickeldorn, innenbeheizt auf: | 80°C |
| Faser-Abzugsspannung: | 4 kp |
| Gelierung, rotierend auf Dorn: | 2h/100 C |
| Harzgehalt: | 21-23 Gew.-% |
| Glasfaser Vetrotex®RO99 P122 1200 Tex. | |

Nach einer Härtung von 2 h bei 100°C und 8 h bei 140°C werden an den gewickelten Rohren folgende Eigenschaften gemessen.

| | |
|---|---|
| Querzugfestigkeit: | 70,5 MPa |
| Dehnung: | 5,3 mm/m |
| Modul: | 17,5 GPa·s. |

### Beispiel 10 (nicht erfindungsgemäss)

Beispiel 4 wird mit der Suspension auf Basis eine festen Diglycidylether-Epoxidharzes gemäss Beispiel H wiederholt. Die unter den gleichen Härtungsbedingungen hergstellten Formkörper weisen eine Bruchzähigkeit (Double Torsion Test) von 998 J/m² auf.

### Beispiel 11 (nicht erfindungsgemäss)

110 g der Diglycidylester-Core/Shell-Polymer-Suspension gemäss Beispiel C werden auf 50° C erwärmt. Dann werden 91 g Hexahydrophthalsäureanhydrid und 0,5 g N-Benzyldimethylamin, zuvor im Batchverfahren als Gemisch hergestellt, hinzugefügt, und die Gesamtmischung wird bei 50°C gut homogenisiert, bevor 300 g des Füllstoffes portionenweise bei 80°C eingestreut wird. Anschliessend wird die Mischung bei einem Druck von 1 mbar während etwa 7 min evakuiert und in die entsprechenden Formen vergossen. Die Aushärtung erfolgt während 2 h bei 100°C und 16 h bei 140°C. Die Formkörper weisen eine Bruchzähigkeit (Double Torsion Test) von 677 J/m² auf.

### Beispiel 12 (nicht erfindungsgemäss)

220g der festen Diglycidylether-Core/Shell-Polymer-Suspension gemäss Beispiel D werden in einem Gefäss vorgelegt und auf einer Heizplatte bei 100°C aufgeschmolzen. Die Temperatur wird auf 130°C angehoben, dann werden 60g Phthalsäureanhydrid portionenweise hinzugefügt und das Gemsich wird während 3 min homogenisiert. Danach wird das Quarzmehl bei 130°C portionenweise beigegeben. Die Gesamtmischung wird dann während 5 min homogenisiert, 10 min bei einem Druck von 1 mbar evakuiert und anschliessend in Formen vergossen und 16 h bei 140°C ausgehärtet. Die Formkörper weisen eine Bruchzähigkeit (Double Torsion Test) von 1140 J/m² auf

### Beispiel 13

115 g der Diglycidylether-Core/Shell-Polymer-Suspension gemäss Beispiel K, 35g Methylen-bis-(3-methyl-4-aminocyclohexan) und 5 g Benzylamin werden gut vermischt. Die Mischung weist bei 80°C eine Viskosität (Epprecht) von 100 mPa·s auf, und die Gelierzeit der Mischung bei 100°C beträgt 16 min.

Nach einer Aushärtung während 1 h bei 100°C und 8 h bei 140°C werden Formstoffe mit folgenden Eigenschaften erhalten:

| | |
|---|---|
| Bruchzähigkeit (Bend Notch Methode): | 994 J/m² |
| Biegefestigkeit (ISO 178): | 100 MPa |
| Schlagbiegefestigkeit (ISO 179): | 64 kJ/m². |

### Beispiel 14

Beispiel 13 wird ohne Benzylamin wiederholt. Die Mischung und die daraus hergestellten Formstoffe weisen folgende Eigenschaften auf.

| | |
|---|---|
| Gelierzeit bei 100°C: | 16 min |
| Viskosität (Epprecht) bei 80°C: | 80 mPa·s |
| Bruchzähigkeit (Bend Notch Methode): | 580 J/m² |
| Biegefestigkeit (ISO 178): | 102 MPa |
| Schlagbiegefestigkeit (ISO 179): | 40 kJ/m². |

### Beispiel 15

Die Formulierung des Beispiels 13 wurde wie im Beispiel 14 beschrieben zur Herstellung von Glasfaserlaminaten nach dem RTM*-Verfahren verwendet.
*RTM = **R**eaction **T**ransfer **M**oulding

14 Lagen Glasfasergewebe (Brochier-Injectex 21091) der Dimension 24.5 x 24.5 cm werden in eine heizbare geschlossene RTM*-Laminierform, versehen mit einem Hochvakuum-Anschluss und 2 Einlass-Stellen aufgeschichtet.Bei einem Vakuum von 5 Pa (0.05 mbar) und einer Formtempertaur von 120°C ist die Form in etwa 30 Sekunden gefüllt. Nach 2,5 h Vorhärtung in der Form wird diese während einer weiteren Stunde abgekühlt und entformt. Es resultiert ein einwandfreies hellbraunes homogenes Laminat von etwa 4mm Dicke. Anhand von TEM-Aufnahmen der Suspension an den Ein- und Auslass-Stellen der Form kann einwandfrei nachgewiesen werden, dass Zähigkeitsvermittler-Partikel beim Imprägniervorgang nicht herausgefiltert werden. Die Viskosität der Imprägnierformulierung bei der Injektionstemperatur beträgt 50 mPa·s.

Bei einem Harzgehalt von 40% und bei einer Aushärtung während 1 h bei 100°C und 8 h bei 140°C erhält man Laminate aus einem 4mm Glasfaserszewebe mit folgenden Eigenschaften:

| | |
|---|---|
| Glasumwandlungstemperatur (TMA): | 128 C° |
| Bruchzähigkeit (EPFL-Methode)**: | 1650 J/m². |

| | |
|---|---|
| ** Messung an der EPFL(Ecole Polytechnique Federal Lausanne) gemäss P.Davies,W.Cantwell.C.Moulin & H.H.Kausch in Composites Science and Technology 36,153-166(1989). | |

### Beispiel 16

Analog Beispiel 15 wird die Mischung gemäss Beispiel 14 zur Herstellung von Glasfasergewebe-Laminaten mit einem Harzgehalt von 40 % verwendet. An den erhaltenen Laminaten werden folgende Eigenschaften gemessen.

| | |
|---|---|
| Glasumwandlungstemperatur (TMA): | 134 C° |
| Bruchzähigkeit (EPFL-Methode): | 1179 J/m². |

## Patentansprüche

1. Verfahren zur Herstellung einer härtbaren Suspension einer Epoxidharzzusammensetzung, dadurch gekennzeichnet, dass man
a) eine lagerstabile Suspension aus einem Epoxidharz und einem darin suspendierten festen Core/Shell-Polymer als Zähigkeitsvermittler herstellt, das einen Kern (core) aus Polybutadien oder Polybutadien/Polystyrol enthält und bezüglich eines Epoxidharzsystems keine reaktiven Gruppen aufweist, indem man entweder
a1), bei Verwendung von flüssigen Epoxidharzen, die wässrige Emulsion des Core/Shell-Polymers gegebenenfalls in Gegenwart eines Lösungsmittels dem Epoxidharz zugibt und das Wasser oder Wasser/Lösungsmittelgemisch unter Vakuum abdestilliert oder
a2), bei Verwendung von festen Epoxidharzen, das feste Epoxidharz aufschmilzt oder in einem geeigneten Lösungsmittel löst und die wässrige Emulsion des Core/Shell-Polymers zugibt und anschliessend das Wasser oder Wasser/Lösungemittelgemisch unter Vakuum abdestilliert, und dann in die lagerstabile Suspension
b) ein Härtungsmittel ausgewählt aus einem Polyamin, Dicyandiamid oder einem katalytisch härtenden Härtungsmittel und gegebenenfalls
c) einen Härtungskatalysator oder übliche Füllstoffe, Verstärkungsmaterialien oder Zusätze mit Hilfe bekannter Mischaggregate einmischt.

2. Verfahren gemäss Anspruch 1, dadurch gekennzeichnet, dass man als Epoxidharz einen flüssigen oder festen Polyglycidylether oder -ester oder ein cycloaliphatisches Epoxidharz verwendet.

3. Verfahren gemäss Anspruch 1, dadurch gekennzeichnet, dass man als Epoxidharz einen flüssigen oder festen Bisphenoldiglycidylether oder einen Diglycidylester einer cycloaliphatischen oder aromatischen Dicarbonsäure verwendet.

## Claims

1. A process for preparing a curable suspension of an epoxy resin formulation,
which comprises
a) preparing a storage-stable suspension of an epoxy resin and a solid core/shell polymer suspended therein as toughener, where this polymer comprises a core of polybutadiene or polybutadiene/polystyrene and has no groups that react with an epoxy resin system, by either
a1) using liquid epoxy resins and adding the aqueous emulsion of the core/shell polymer to the epoxy resin, if desired in the presence of a solvent, and distilling off the water or water/solvent mixture under vacuum or
a2) using solid epoxy resins and melting the solid epoxy resin or dissolving the same in a suitable solvent and adding the aqueous emulsion of the core/shell polymer and then distilling off the water or water/solvent mixture under vacuum, and then mixing into the storage-stable suspension
b) a hardener selected from the group consisting of polyamines, dicyandiamide and catalytical hardeners and, if desired,
c) a curing catalyst or customary fillers, reinforcing materials or additives, with the aid of known mixing assemblies.

2. A process according to claim 1, wherein the epoxy resin used comprises a liquid or solid polyglycidy) ether or polyglycidyl ester or a cycloaliphatic epoxy resin.

3. A process according to claim 1, wherein the epoxy resin used comprises a liquid or solid bisphenol diglycidyl ether or a diglycidyl ester of a cycloaliphatic or aromatic dicarboxylic acid.

## Revendications

1. Procédé pour la préparation d'un suspension durcissable d'une composition de résine époxyde, caractérisé en ce que,
a) l'on prépare une suspension stable en stockage constituée d'une résine époxyde et d'un polymère coeur-gaine solide comme agent d'amélioration de la ténacité en suspension à l'intérieur, qui contient un coeur (core) constitué de polybutadiène ou de polybutadiène/polystyrène et ne présente pas de groupes réactifs vis à vis d'un système de résine époxyde, soit
a1) en utilisant des résines époxyde liquides, en ajoutant l'émulsion aqueuse du polymère coeur-gaine à la résine époxyde éventuellement en présence d'un solvant et en distillant sous vide l'eau ou le mélange d'eau et de solvant ou
a2) en utilisant des résines époxyde solides, en faisant fondre la résine époxyde solide ou en la dissolvant dans un solvant approprié et en ajoutant l'émulsion aqueuse du polymère coeur-gaine et en distillant ensuite sous vide l'eau ou le mélange d'eau et de solvant, et en mélangeant ensuite dans la suspension stable en stockage
b) l'on mélange un durcisseur choisi parmi une polyamine, un dicyandiamide ou un durcisseur à durcissement catalytique et éventuellement
c) un catalyseur de durcissement ou des charges usuelles, des matériaux de renforcement ou des additifs au moyen d'unités de mélanges connues.

2. Procédé selon la revendication 1, caractérisé en ce qu'on utilise comme résine époxyde un éther ou un ester de polyglycidyle liquide ou solide ou une résine époxyde cycloaliphatique.

3. Procédé selon la revendication 1, caractérisé en ce qu'on utilise comme résine époxyde un éther diglycidylique de bisphénol ou un ester de diglycidyle d'un acide dicarboxylique cycloaliphatique ou aromatique liquide ou solide.
